# EUROPÄISCHE PATENTANMELDUNG

(11) **EP 1 715 228 A1**
(43) Veröffentlichungstag der Anmeldung: **25.10.2006**
(21) Anmeldenummer: 06005028.3
(22) Anmeldetag: 11.03.2006
(51) Int. Cl.: F16K 7/07, F16K 15/14

(54) **Vakuumentwässerungssystem**

(30) Priorität: 20.04.2005 DE 102005018449
(71) Anmelder: ROEDIGER VAKUUM- und HAUSTECHNIK GmbH, 63450 Hanau (DE)
(72) Erfinder: Betz, Reinhold, 21255 Tostedt (DE)
(74) Vertreter: Stoffregen, Hans-Herbert

(57) **Zusammenfassung**

Die Erfindung bezieht sich auf ein Vakuumentwässerungssystem mit einer mit einer Unterdruckquelle in Verbindung stehenden Unterdruckleitung, in der zwischen einer anfallendes Abwasser sammelnden Sammelstelle und der Unterdruckquelle ein Unterdruckventil (10) angeordnet ist, das ein Gehäuse aufweist, das einen an Unterdruckseite der Unterdruckleitung anschließbaren unterdruckseitigen Gehäuseabschnitt (53) und einen an zulaufseitiger Unterdruckleitung anschließbaren zulaufseitigen Gehäuseabschnitt (51) aufweist. Um auch bei nicht hinreichendem Unterdruck an der unterdruckseitigen Öffnung des Unterdruckventils sicherzustellen, dass die Unterdruckleitung im erforderlichen Umfang abgesperrt ist, wird vorgeschlagen, dass in dem unterdruckseitigen Gehäuseabschnitt (53) des Unterdruckventils (10) ein ein Zurückströmen von Abwasser sperrendes Rückschlagventil (64) angeordnet ist.

## Beschreibung

Die Erfindung bezieht sich auf ein Vakuumentwässerungssystem mit einer mit einer Unterdruckquelle in Verbindung stehenden Unterdruckleitung, in der zwischen einer anfallendes Abwasser sammelnden Sammelstelle und der Unterdruckquelle ein Unterdruckventil angeordnet ist, das ein Gehäuse aufweist, das einen an Unterdruckseite der Unterdruckleitung anschließbaren unterdruckseitigen Gehäuseabschnitt und einen an zulaufseitiger Unterdruckleitung anschließbaren zulaufseitigen Gehäuseabschnitt aufweist, wobei vorzugsweise ein flexibles, insbesondere rohrartiges erstes Element des Unterdruckventils in dem Gehäuse angeordnet ist, zwischen dem Gehäuse und dem ersten Element vorhandener Raum mit Druck beaufschlagbar ist und bei geschlossenem Unterdruckventil das erste Element in einem vorzugsweise linienförmigen oder streifenförmigen quer zur Längsachse des ersten Elements verlaufenden Bereich abdichtend zusammendrückbar ist.

Bei der Vakuumkanalisation ist es erforderlich, in Sammelstellen wie Wasch- oder Toilettenbecken oder Urinale anfallendes Abwasser nach Einleiten eines Spülvorganges über ein Unterdruckventil abzusaugen. Nach dem Stand der Technik werden hierfür mechanische Ventile benutzt, also solche, die einen Ventilstößel, einen Ventilkolben sowie einen Ventilsitz umfassen. Dabei wird das Ventil selbst durch Druckbeaufschlagung einer Membran betätigt. Entsprechende Ventile sind konstruktiv aufwendig und voluminös, so dass ein erheblicher Platzbedarf erforderlich ist.

Ein Unterdruckventil für eine Vakuumentwässerung ist der EP-A-0 937 926 zu entnehmen. Ein entsprechendes Unterdruckventil bietet bei einfachem Aufbau eine hohe Zuverlässigkeit. Gleichzeitig ist ein kompakter Aufbau gegeben.

Der vorliegenden Erfindung liegt die Aufgabe zugrunde, ein Vakuumentwässerungssystem zuvor beschriebener Art so weiterzubilden, dass auch bei nicht hinreichendem Unterdruck an der unterdruckseitigen Öffnung des Unterdruckventils sichergestellt ist, dass die Unterdruckleitung im erforderlichen Umfang abgesperrt ist.

Zur Lösung der Aufgabe sieht die Erfindung im Wesentlichen vor, dass in dem unterdruckseitigen Gehäuseabschnitt des Unterdruckventils ein ein Zurückströmen von Abwasser sperrendes Rückschlagventil angeordnet ist. Dabei ist insbesondere vorgesehen, dass der unterdruckseitige Gehäuseabschnitt ein Ansatz des Gehäuses ist.

Durch das Rückschlagventil wird sichergestellt, dass dann, wenn unterdruckseitig nicht hinreichender Unterdruck ansteht, das Rückschlagventil geschlossen ist und somit Flüssigkeit in das Unterdruckventil nicht fließen kann, wodurch andernfalls die Gefahr bestünde, dass das geschlossene Unterdruckventil durch die zurückströmende Flüssigkeit geöffnet wird. Dies könnte dazu führen, dass das Vakuumentwässerungssystem nicht ordnungsgemäß arbeitet, insbesondere Flüssigkeit zur Sammelstelle bzw. Entstehungsort wie zum Beispiel einem Wasch- oder WC-Becken zurückfließen kann.

Zwar ist es bekannt, das Zurückströmen von Flüssigkeit mittels Absperrventile zu unterbinden. Diese sind jedoch losgelöst von Unterdruckventilen in Flüssigkeit führenden Leitungen angeordnet und auch nicht für Unterdrucksysteme bestimmt. So ist zum Beispiel der DE-A-197 44 040 eine Ventileinrichtung für eine Scheibenreinigungseinrichtung in Kraftfahrzeugen zu entnehmen, bei der in einem Anschlussstück ein Rückschlagventil angeordnet ist, durch das ein Zurückströmen von Reinigungsflüssigkeit in einen Vorratsbehälter vermieden werden soll.

Die DE-T-600 17 270 sieht eine serielle Anordnung von Rückschlagventilen vor, um bei Wasserversorgungen, die Gries oder kleine Gesteinsfragmente enthalten, ein sicheres Zurückfließen zu unterbinden. Nach der DE-A-33 45 599 sind an Formkästen für das Vakuum-Formverfahren Rückschlagventile angeordnet, die über Winkelhebel betätigbar sind.

Bei dem erfindungsgemäß weitergebildeten Vakuumentwässerungssystem ist das Rückschlagventil insbesondere ein flexibles Element wie zum Beispiel aus Elastomermaterial oder dieses enthaltend, das in Längsrichtung und in abdichtender Position in einem ersten Längsschnitt aus zwei Schenkeln eines gleichschenkligen Dreiecks besteht und in einem um 90° zu dem ersten Längsschnitt versetzt verlaufenden zweiten Längsschnitt die Geometrie eines U's aufweist.

Mit anderen Worten weist das flexible Element in geschlossener Stellung in einer ersten Seitenansicht die Geometrie eines gleichschenkligen Dreiecks und in einer um 90° zu der ersten Seitenansicht versetzt verlaufenden zweiten Seitenansicht die Geometrie eines Vierecks auf.

Das Rückschlagventil sollte sich bevorzugterweise in einem rohrförmigen Abschnitt oder Ansatz des Gehäuses des Schlauchventils erstrecken. Der Abschnitt bzw. Ansatz geht sodann in die Unterdruckleitung des Vakuumentwässerungssystems über.

Das flexible Element ist derart dimensioniert und ausgelegt, dass bei Anstehen eines Unterdrucks an der Unterdruckleitung das Rückschlagventil geöffnet ist. Strömt jedoch Flüssigkeit zurück, so wird das Rückschlagventil dadurch geschlossen, dass Wasser in den Zwischenraum zwischen Außenfläche des Rückschlagventils und Innenfläche des rohrförmigen Abschnitts bzw. Ansatzes des Gehäuses des Unterdruckventils gelangt. Hierdurch bedingt wirken auf die Außenseiten des Rückschlagventils Kräfte, die das Rückschlagventil schließen.

Insbesondere ist vorgesehen, dass das Rückschlagventil bildende flexible zweite Element einen hohlzylindrischen Basisabschnitts aufweist, von dem in geschlossener Stellung des Rückschlagventils zwei diametral gegenüberliegende in Seitenansicht des flexiblen Elements eine Dreiecksgeometrie aufweisende Hohlzylinderabschnitte mit jeweils einer Spitze ausgehen, die über plane Abschnitte verbunden sind, die im Bereich einer die Spitzen der Hohlzylinderabschnitte verbindenden Gerade getrennt sind. Dabei sind die entlang der Geraden verlaufenden Ränder der planen Abschnitte insbesondere als Dichtlippen ausgebildet, um die Dichtfunktion des flexiblen zweiten Elements, also des Rückschlagventils zu verbessern.

Das erste und/oder das zweite flexible Element bestehen insbesondere aus Elastomermaterial, wobei es sich jeweils um gespritzte Teile handelt.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Es zeigen:
- Fig. 1: einen Längsquerschnitt durch ein Unterdruckventil,
- Fig. 2: eine Draufsicht auf ein Rückschlagventil,
- Fig. 3: eine Seitenansicht des Rückschlagventils gemäß Fig. 2 und
- Fig. 4: einen Schnitt entlang der Linie IV-IV in Fig. 3.

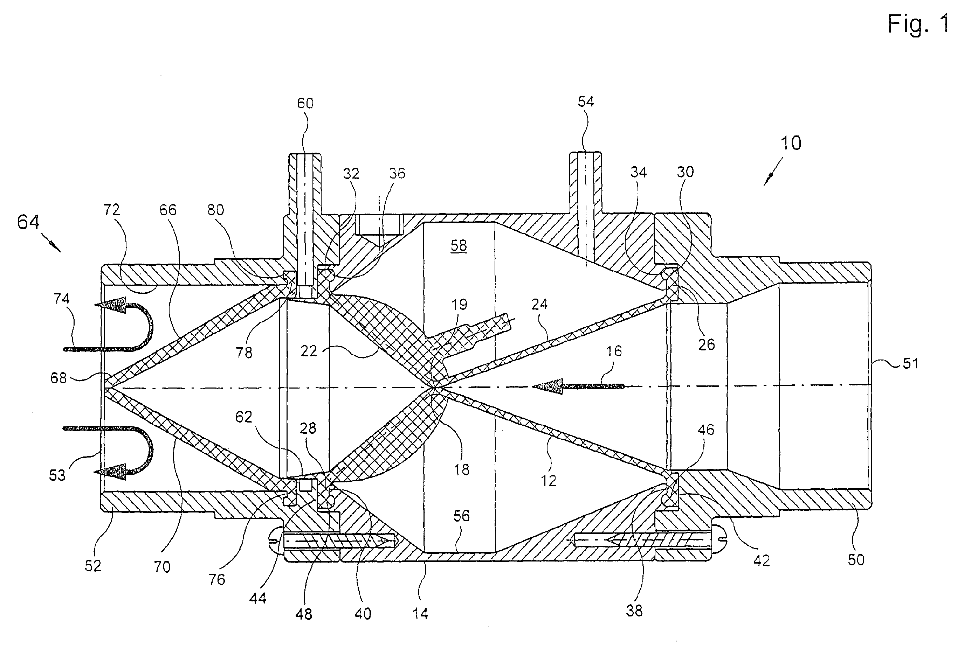

In Fig. 1 ist ein Längsschnitt durch ein Unterdruckventil 10 einer Vakuumentwässerungsanlage dargestellt, mittels der zum Beispiel ein WC-Becken oder ein Waschbecken entleerbar ist. Das Unterdruckventil 10 ist in einer Unterdruckleitung zwischen einem als Sammelstelle zu bezeichnenden Entstehungsort wie dem WC- oder Waschbecken und einer Unterdruckquelle angeordnet, um mittels des in der Unterdruckleitung herrschenden Unterdrucks Abwasser absaugen zu können. Zum Öffnen der Unterdruckleitung, also zum Absaugen des angesammelten Abwassers wird das Unterdruckventil 10 über ein Steuerventil geöffnet. Das Unterdruckventil 10 arbeitet ohne mechanisch arbeitende Schieber, Kolben oder ähnliches und umfasst als Verschlusselement ein flexibles, vorzugsweise rohrartiges erstes Element 12, das in einem Gehäuse 14 derart eingespannt sein kann, dass das Element 12 in axialer Richtung (Pfeil 16) eine Stauchung erfährt. Das Element 12 liegt in einem linienförmigen Bereich 18, 19 abdichtend aufeinander, wie dies der Darstellung zu entnehmen ist.

Das flexible Element 12 ist dabei derart vorgeformt, dass der linien- bzw. streifenförmige Bereich 18, 19 nicht nur vorzugsweise einen gebogenen Verlauf aufweist, sondern außermittig verläuft, so dass das Element 12 seinerseits aus Abschnitten 22, 24 unterschiedlicher Längen besteht, die durch den Abdichtbereich 18, 19 unterteilt sind.

Wie die Darstellung verdeutlicht, weist jeder Abschnitt 22, 24 im Längsschnitt eine gleichschenklig dreieckigförmige Geometrie mit gemeinsamer Spitze auf, die durch den Dichtbereich 18, 19 gebildet wird.

Folglich weisen die Abschnitte 22, 24 in der dargestellten Draufsicht eine Dreiecksgeometrie auf. In der um 90° gedrehten Ansicht, also senkrecht zur Zeichenebene ergibt sich demgegenüber eine gleichschenklige Trapezform oder Viereckform. Insoweit wird jedoch auf die prinzipiell Konstruktion der EP-A-0 937 926 verwiesen, auf deren Offenbarung ausdrücklich Bezug genommen wird.

Das flexible Element 12 weist im Bereich seiner beiden Enden einen umlaufenden im Schnitt U-förmigen Rand 26, 28 auf, dessen jeweiliger in Längsrichtung (Pfeil 16) verlaufender Außenschenkel 30, 32 in einer umlaufenden Nut 34, 36 eingreift, die von der jeweiligen Stirnfläche 38, 40 des Gehäuses 14 ausgeht.

Entlang Außenseite des jeweiligen Querschenkels 42, 44 des U-förmigen Randes 26, 28 liegt an einem umlaufenden ringförmigen Abschnitt 46, 48 eines rohrförmigen Ansatzes 50, 52 an, der im Ausführungsbeispiel mit dem Gehäuse 14 verschraubt ist. Eine integrale Ausbildung ist gleichfalls möglich.

Mit anderen Worten wird der jeweilige sich quer zur Längsrichtung des flexiblen Elements 12 erstreckende Rand 26, 28 zwischen der Stirnfläche 38 bzw. 40 des Gehäuses 14 und dem rohrförmigen Ansatz 50 bzw. 52 festgeklemmt. Dabei sollte der Abstand zwischen den Stimflächen 42, 44 des Gehäuses 14 kleiner als die Länge des flexiblen Elements 12 im entspannten Zustand. Somit ist sichergestellt, dass beim Fixieren des flexiblen Elements 12 zwischen dem Gehäuse 14 und den rohrförmigen Ansätzen 50, 52 ein Stauchen des flexiblen Elementes 12 erfolgt, die die abdichtende Wirkung zwischen den aufeinander liegenden Dichtbereichen 18, 19 verstärkt, wenn das Ventil 10 geschlossen ist. Ferner kann von dem Abschnitt 22 ein nicht näher gekennzeichneter Abschnitt ausgehen, der einen Magneten aufweist, der zur Impulszählung dient.

Der Ansatz 50 des Gehäuses 14 weist die zulaufseitige Öffnung 51 und der Ansatz 52 die unterdruckseitige Öffnung 53 des Unterdruckventils 10 auf oder geht in diese über.

Das Gehäuse 14 weist des Weiteren einen Anschluss 54 auf, der in dem zwischen dem flexiblen Element 12 und der Gehäuseinnenwandung 54 verlaufenden Raum 58 mündet.

Der Raum 58 kann im erforderlichen Umfang mit Druck beaufschlagt werden, d.h. mit Unterdruck, wenn das Ventil 10 öffnen soll, also die Bereiche 18, 19 des rohrförmigen Elements 12 zueinander zu beabstanden sind. In diesem Fall kann durch das Unterdruckventil 10 abzusaugende Flüssigkeit strömen, wobei der rohrförmige Ansatz 50 mit einem abzusaugenden Entstehungsort wie WC-Becken und der rohrförmige Ansatz 52 mit einer Vakuumleitung verbunden sind.

Des Weiteren besteht die Möglichkeit, den Raum 58 mit Atmosphärendruck bzw. Überdruck zu beaufschlagen, um eine erhöhte Abdichtwirkung bei geschlossenem Ventil 10 zu ermöglichen. Insbesondere ist jedoch der Anschluss 54 mit einem Hilfsventil verbunden, über das eine Verbindung mit der Unterdruckleitung dann erfolgt, wenn das Unterdruckventil 10 geöffnet wird.

In der Schließstellung strömt über das Steuerventil Atmosphärendruck in den Raum 58, wodurch die erforderliche Schließwirkung erzielt wird.

Des Weiteren geht vom unterdruckseitigen Bereich des Gehäuses 14 bzw. dem unterdruckseitig verlaufendem rohrförmigen Abschnitt 52 ein weiterer Unterdruckanschluss 60 aus, der zu einem Steuerventil führt. Der Anschluss 60 wird mit Unterdruck beaufschlagt, sofern unterdruckseitig ein Vakuum anliegt. Damit Flüssigkeit beim Öffnen des Ventils 10 in den Anschluss 60 nicht strömen kann, ist dieser öffnungsseitig von einer Lippe 62 des Abschnitts 22 des flexiblen Elements 12 verschließbar, und zwar dann, wenn bei geöffnetem Ventil 10 Flüssigkeit zur Unterdruckseite (Öffnung 53) strömt. Somit übt die Lippe 62 die Funktion eines Rückschlagventils aus.

Sollte in der Unterdruckleitung nicht der notwendige Unterdruck herrschen, um Flüssigkeit und Feststoffe im erforderlichen Umfang abzusaugen, besteht das Risiko, dass Flüssigkeit über die Vakuumleitung und den rohrförmigen Ansatz 52, also zum Unterdruckventil 10 zurückströmt mit der Folge, dass hierdurch das Unterdruckventil 10, d.h. das flexible Element 12, geöffnet und somit Flüssigkeit zum Entstehungsort zurückströmen könnte, also entgegen der Richtung des Pfeils 16. Um dies zu verhindern, ist dem Unterdruckventil 10, d.h. dem flexiblen ersten Element 12 stromabwärts ein Rückschlagventil 64 vorgeschaltet, das sich im Ausführungsbeispiel in Längsrichtung des rohrförmigen Ansatzes 52 erstreckt.

Bevorzugterweise ist das Rückschlagventil 64 ein flexibles zweites Element, das prinzipiell dem Abschnitt 24 des flexiblen ersten Elements 12 des Unterdruckventils 10 entsprechen kann. Dabei ist das entsprechende flexible zweite Element 66 derart vorgeformt, dass die vakuumleitungsseitig verlaufenden Ränder 68 linienförmig aufeinander liegen, so dass sich infolgedessen bei geschlossenem Rückschlagventil 64 entsprechend dem Abschnitt 24 in der Zeichenebene eine Dreiecksgeometrie und in Ansicht senkrecht zur Zeichenebene eine rechteckförmige Geometrie ergibt.

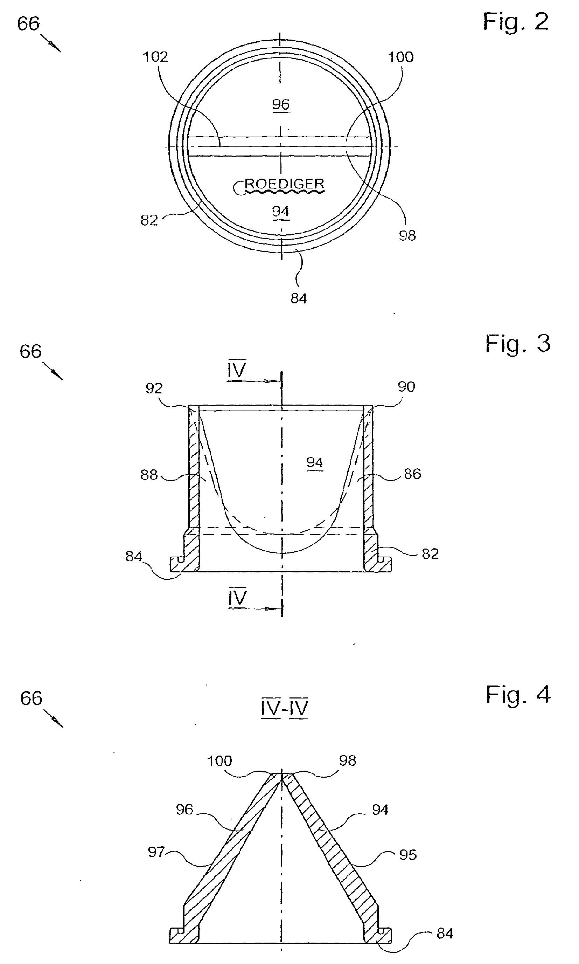

In den Fig. 2 bis 4 ist noch einmal das auch als Schnabel-Ventil zu bezeichnende Rückschlagventil 66 dargestellt, das insbesondere aus Elastomermaterial besteht und ein Spritzteil ist. Das Rückschlagventil 66 weist einen hohlzylinderförmigen Basisabschnitt 82 auf, der durch einen im Schnitt eine U-Form aufweisenden Rand 84 begrenzt ist, über den entsprechend den Abschnitten 22, 24 des flexiblen ersten Elements 12 das Rückschlagventil 24 in einem entsprechend geometrisch angepassten Nut 80 des rohrförmigen Ansatzes 52 einsetzbar ist, um das Schlauchventil 66 zu fixieren. In die Nut 80 greift Außenschenkel 78 des Rands 84 ein.

Von dem Basisabschnitt 82 gehen zwei diametral gegenüberliegende erste Abschnitte 86, 88 aus, die jeweils einem Abschnitt eines Hohlzylinders folgen und dem Rand 84 gegenüberliegende in einer Spitze 90, 92 enden.

Die Abschnitte 86, 88 weisen in Seitenansicht des Rückschlagventils 66, also in der Zeichenebene eine Geometrie eines gleichschenkligen Dreiecks auf.

Die Abschnitte 86, 88 sind durch Abschnitte 94, 96 verbunden, die außenseitig plan sind. Entsprechend der Schnittdarstellung gemäß Fig. 4 können die Abschnitte 94, 96 zu ihrem freien Ende hin, die die Spitzen 90, 92 der Abschnitte 86, 88 verbinden, sich in ihrer Dicke verjüngen, um eine gewünschte Flexibilität aufzuweisen. Die Abschnitte 94, 96 sind entlang eine die Spitzen 90, 92 verbindenden Geraden voneinander getrennt, um die Funktion eines Ventils ausüben zu können.

In den zeichnerischen Darstellungen ist das Rückschlagventil 66 in geschlossenem Zustand dargestellt, so dass infolge dessen die entlang der zwischen den Spitzen 90, 92 verlaufenden Geraden verlaufenden Ränder 98, 100 der Abschnitte 94, 96 aneinander liegen. Die Ränder 98, 100 sind dabei vorzugsweise als Dichtlippen ausgebildet.

Das erwähntermaßen vorzugsweise aus Elastomermaterial bestehende Rückschlagventil 66 ist ein gespritztes Teil, bei dem nachträglich die Öffnung gestanzt ist, also die nach dem Spritzen miteinander verbundenen Ränder 98, 100 durchtrennt wie durchstanzt (Linie 102) werden.

Fließt Flüssigkeit durch die Vakuumleitung zurück in Richtung des Gehäuses 14, so gelangt erstere in den Bereich zwischen Außenfläche 70 (in Fig. 4 Flächen 95, 97) des flexiblen ersten Elements 66 und Innenfläche 72 des rohrförmigen Ansatzes 52, wodurch das Rückschlagventil 64 geschlossen wird. Die Strömung der Flüssigkeit wird durch die Pfeile 74 symbolisiert.

Die sich in den Zwischenraum zwischen der Außenfläche 70, 95, 97 des flexiblen ersten Elements 66 und der Innenwandung 72 des rokförmigen Ansatzes 52 angesammelte Flüssigkeit übt folglich Schließkräfte auf den Schlauchabschnitt 66 aus.

Sobald in der Vakuumleitung der erforderliche Unterdruck herrscht, wird die Flüssigkeit abgesaugt und aufgrund des herrschenden Unterdrucks das Rückschlagventil 64 geöffnet, so dass bei sodann geöffnetem Ventil 10 Flüssigkeit und Feststoffe über den rohrförmigen Ansatz 50 abgesaugt werden kann.

## Patentansprüche

1. Vakuumentwässerungssystem mit einer mit einer Unterdruckquelle in Verbindung stehenden Unterdruckleitung, in der zwischen einer anfallendes Abwasser sammelnden Sammelstelle und der Unterdruckquelle ein Unterdruckventil (10) angeordnet ist, das ein Gehäuse aufweist, das einen an Unterdruckseite der Unterdruckleitung anschließbaren unterdruckseitigen Gehäuseabschnitt (53) und einen an zulaufseitiger Unterdruckleitung anschließbaren zulaufseitigen Gehäuseabschnitt (51) aufweist, wobei vorzugsweise ein flexibles, insbesondere rohrartiges erstes Element (12) des Unterdruckventils in dem Gehäuse angeordnet ist, zwischen dem Gehäuse und dem ersten Element vorhandener Raum (48) mit Druck beaufschlagbar ist und bei geschlossenem Unterdruckventil das erste Element in einem vorzugsweise linienförmigen oder streifenförmigen quer zur Längsachse des ersten Elements verlaufenden Bereich (18, 19) abdichtend zusammendrückbar ist,
**dadurch gekennzeichnet,**
**dass** in dem unterdruckseitigen Gehäuseabschnitt (53) des Unterdruckventils (10) ein ein Zurückströmen von Abwasser sperrendes Rückschlagventil (64) angeordnet ist.

2. Vakuumentwässerungssystem nach Anspruch 1,
**dadurch gekennzeichnet,**
**dass** der unterdruckseitige Gehäuseabschnitt (53) ein Ansatz des Gehäuses ist.

3. Vakuumentwässerungssystem nach Anspruch 1,
**dadurch gekennzeichnet,**
**dass** das Rückschlagventil (64) von dem Gehäuse (14) des Unterdruckventils (10) bzw. einem rohrförmigen Abschnitt oder Ansatz (52) des Gehäuses ausgeht.

4. Vakuumentwässerungssystem nach Anspruch 1 oder 2,
**dadurch gekennzeichnet,**
**dass** das Rückschlagventil (64) ein flexibles zweites Element (66) ist oder aufweist, das in abdichtender bzw. geschlossener Stellung in einer ersten Seitenansicht eine Geometrie eines gleichschenkligen Dreiecks und in einer um 90° versetzt verlaufenden Seitenansicht eine Geometrie eines Vierecks aufweist.

5. Vakuumentwässerungssystem nach zumindest einem der vorhergehenden Ansprüche,
**dadurch gekennzeichnet,**
**dass** das flexible zweite Element (66) einen hohlzylindrischen Basisabschnitt (82) aufweist, von dem in geschlossener Stellung des Rückschlagventils zwei diametral gegenüberliegende in Seitenansicht des Rückschlagventils eine Dreiecksgeometrie aufweisende Hohlzylinderabschnitte (86, 88) mit jeweils einer Spitze (90, 92) ausgehen, die über zumindest außenseitig plane Abschnitte (94, 96) verbunden sind, die im Bereich einer die Spitzen (90, 92) der Hohlzylinderabschnitte (86, 88) verbindenden Geraden getrennt sind.

6. Vakuumentwässerungssystem nach Anspruch 4,
**dadurch gekennzeichnet,**
**dass** entlang der Geraden verlaufender Rand (98, 100) des jeweiligen zumindest außenseitig planen Abschnitts (94, 96) des flexiblen zweiten Elements (66) eine Dichtlippe ist.

7. Vakuumentwässerungssystem nach zumindest einem der vorhergehenden Ansprüche,
**dadurch gekennzeichnet,**
**dass** das flexible zweite Element (66) über einen umlaufenden im Schnitt eine U-Form aufweisenden Rand (76) des Basisabschnitts in dem Gehäuse (14) bzw. dem rohrförmigen Ansatz (52) oder zwischen diesen verlaufend fixiert it.

8. Vakuumentwässerungssystem nach zumindest einem der vorhergehenden Ansprüche,
**dadurch gekennzeichnet,**
**dass** das erste und/oder zweite flexible Element (12, 66) aus Elastomermaterial besteht oder diese enthält.

9. Vakuumentwässerungssystem nach zumindest einem der vorhergehenden Ansprüche,
**dadurch gekennzeichnet,**
**dass** das erste und/oder zweite flexible Element (12, 66) ein gespritztes Teil ist.
